# EUROPEAN PATENT SPECIFICATION

(11) **EP 4 440 720 B1**
(45) Date of publication and mention of the grant of the patent: **10.06.2026**
(21) Application number: 22817151.8
(22) Date of filing: 09.11.2022
(51) Int. Cl.: B01D 25/127, B01D 25/21, B01D 25/34

(54) **A HANDLING SYSTEM OF A SUBFRAME FORMING PART OF A FILTER PLATE FRAME ASSEMBLY IN A HORIZONTAL FILTER PRESS OF A TOWER TYPE, A METHOD OF PERFORMING MAINTENANCE OF SUCH SUBFRAME AND USE OF SUCH HANDLING SYSTEM**
HANDHABUNGSSYSTEM FÜR EINEN TEIL EINER FILTERPLATTENRAHMENANORDNUNG IN EINER TURMFILTERPRESSE,VERFAHREN ZUR WARTUNG EINES SOLCHEN TEILS UND VERWENDUNG EINES SOLCHEN HANDHABUNGSSYSTEMS
SYSTÈME DE MANIPULATION D'UN SOUS-CADRE FAISANT PARTIE D'UN ENSEMBLE CADRE DE PLAQUE DE FILTRATION DANS UN FILTRE-PRESSE HORIZONTAL DE TYPE TOUR, PROCÉDÉ DE MISE EN OEUVRE DE MAINTENANCE D'UN TEL SOUS-CADRE ET UTILISATION D'UN TEL SYSTÈME DE MANIPULATION

(30) Priority: 01.12.2021 FI 20216233
(43) Date of publication of application: 09.10.2024
(73) Proprietor: Metso Finland Oy, 02230 Espoo (FI)
(72) Inventor: MUSTAKANGAS, Mirva Johanna, 33950 Pirkkala (FI); ELORANTA, Teemu Paavali, 54530 Luumäki (FI); KAIPAINEN, Janne Erik Antero, 69510 Halsua (FI); JUVONEN, Ismo, 55300 Rauha (FI)
(74) Representative: AWA Sweden AB
(86) International application number: PCT/EP2022/081230
(87) International publication number: WO 2023/099138

(56) References cited:
- EP-A2- 0 830 936
- WO-A1-2005/120817
- WO-A1-2021/209681
- CN-U- 211 752 752

## Description

### FIELD OF THE INVENTION

The present disclosure relates to a handling system of a subframe forming part of a filter plate frame assembly in a horizontal filter press of a tower type, a method of performing maintenance of such subframe, and the use of a handling system to perform maintenance of a subframe and parts thereof.

### BACKGROUND

In horizontal filter presses of the tower type, a horizontally extending filter chamber is formed between adjacent, superimposed filter plate frame assemblies. During the filtration cycle, the filter plate assemblies are pressed against each other to seal the filter chamber, and a slurry is introduced into the filter chamber with a filtration pressure typically ranging between 8-20 bar over the ambient pressure. The filtrate is separated from the slurry by a filter medium. The filtrate is conducted to further processing, while the solids content of the slurry form a filter cake in the filter chamber. The filter cake is removed from the filter chamber by lifting the filter plate frame assemblies such that they move away from each other, i.e., opening the filter chamber. The filter medium, typically forming an endless loop in a zig-zag -pattern, is advanced and the filter cake is discharged by dropping it from an upper surface of the filter medium as the medium turns around a roller.

The filter plate frame assembly comprises multiple wearing components, such as seals and a diaphragm that must be replaced periodically. To replace these components the whole filter frame assembly typically has to be removed, which is time consuming and requires the filter press to be out of operation during replacement. Alternatively, worn components may be replaced in place, i.e., without removing the filter plate frame assembly. However, this requires additional precautionary safety measures, and the operators must pay great attention to safety instructions and regulations. If the precautionary safety measures and instructions are not followed, a serious risk of injury may be posed as work is done under one or more suspended filter plate frame assemblies. In this context, it is important to understand that a typical filter press of the tower type comprises 10-25 superimposed filter plate frame assemblies. This means that maintenance involves the inconvenience of working at high heights, but also the risk of dropping tools, bolts etc.

As one measure to target the problems mentioned above, it is known to provide a filter plate frame assembly which comprises a rigid filter plate frame having two parallel frame flanks and two opposing frame ends which together define a closed periphery which is configured to receive a removable subframe. The subframe has a central opening having a closed area which defines a lateral boundary of an associated filter chamber. When in use in a filter press, the subframe is receivable into and removable out from the filter plate frame by removing one of the two frame ends of the filter plate frame. By the thus removable subframe, maintenance may be highly facilitated since a large part of the work relating to the diaphragm, seals etc. may be made outside the filter press. There is however still a need for a facilitated and safe handling of the individual subframes in and out of the filter press.

WO2005/120817 A1 discloses a filter press for forming ceramic slabs, and its forming method.

WO2021/209681 A1 discloses a filter plate frame assembly, a horizontal filter press, such as a tower press, having such a plate frame assembly, and a method of replacing worn components of a horizontal filter press.

CN211752752U discloses a quick disassembling and assembling device for a filter plate of a vertical filter press. The assembling device comprises a stand column and a pair of transverse guide rails that are fixed to the stand column. Further, the assembling device comprises a sliding trolley which can be in sliding fit with the guide rails and that is used for bearing the filter plate that is arranged at the upper parts of the pair of transverse guide rails. A lifting device that is capable of adjusting the stand column is arranged on the stand column. A traveling crane capable of hoisting one side of the filter plate is arranged above the stand column. The filter plate of the filter press is carried by the sliding trolley.

### SUMMARY

An object of the disclosure is to provide a handling system that allows the handling of a subframe in and out of the filter plate frame assembly to be facilitated and thereby to be performed in a safer manner.

Another object of the disclosure is to provide a handling system that provides an overall improved strength to the subframe during handling thereof in and out of the filter plate frame assembly.

Yet another object of the disclosure is to provide a handling system that is easy to be moved in the vertical direction and to be docked to an individual filter plate frame assembly in a horizontal filter press of the tower type which comprises a plurality of superimposed filter plate frame assemblies.

Still another object of the disclosure is to provide a method to perform maintenance of wearable parts of a filter plate frame assembly forming part of a horizontal filter press of the tower type.

According to a first aspect of the disclosure, these and other objects are achieved, in full or at least in part, by a handling system of a subframe forming part of a filter plate frame assembly in a horizontal filter press of a tower type, said handling system being described by the features of claim 1.

Accordingly, a handling system is provided that comprises a supporting structure that may be removably connected in a suspended manner to the filter press in an area adjacent a filter plate frame assembly which contains a subframe to be subjected to a maintenance operation. During maintenance of the subframe, which during ordinary use is positioned in the filter plate frame assembly and hence inside the filter press, the subframe may be pulled out from the filter plate frame assembly while being slidingly supported on the support surface of the supporting structure. The subframe and the diaphragm and sealings supported by the subframe may thereby easily be inspected and subjected to maintenance and if necessary be replaced in a position outside the filter press. This allows a safe working environment and good ergonomics. After completed maintenance, the subframe may be inserted anew into the filter plate frame assembly while being slidingly supported on the support surface of the supporting structure.

By the suspension arrangement, the handling system may conveniently, and in a safe manner be moved from one position in the filter press adjacent a first filter plate frame assembly to a position adjacent a second filter plate frame assembly among the plurality of superimposed filter plate frame assemblies.

According to an embodiment, the suspension arrangement may comprise a first and a second bracket supported by the supporting structure, the brackets being configured to allow the first end portion of the supporting structure to be connected to the filter press in a position adjacent the filter plate frame assembly.

The brackets may by way of example have a hook shape. The hooks may be configured to engage complementary protrusions in the filter press or to protrusions on the edge portions of the respective filter plate frame assemblies of the filter press. Thus, no separate bolts or the like requiring the use of tools are required. The brackets may by way of example be supported by the rails or by the support surface. The connection between the supporting structure and the filter press or the filter plate frame assembly may be either fixed or hinged.

The connection between the respective second ends of the suspension members and the respective longitudinally extending edge portions may be arranged closer to a center point of the respective longitudinally extending edge portions than to the first end portion of the supporting structure. No matter position, the connection between the respective second ends of the suspension members and the respective longitudinally extending edge portions of the supporting structure should be horizontally displaced in view of the momentum point of the supporting structure, i.e. the connection between the supporting structure and the filter press.

The first and second suspension members may each be a belt, a wire, or a chain. No matter type, it is preferred that the suspension members(s) have non-elastic properties as seen in the longitudinal direction to thereby minimize elongation. It is however preferred that the suspension members as such may be collapsible, such as being foldable, formable into a loop, or rollable to thereby facilitate handling and stowing.

In an alternative embodiment, the first and second suspension members extending between the filter press and the supporting structure may be omitted. Instead, the supporting structure may be supported from below by one or more adjustable legs, a forklift, a sax lift or the like. It may even be supported from above via a traverse.

The connection between the suspension members and the respective longitudinally extending edge portion of the supporting structure may be made by using a quick coupling, such as a carbine hook.

Each suspension member may be provided with one or more connectors along its length. Alternatively, the respective longitudinally extending edge portion of the supporting structure may be provided with one or more connection points along its longitudinal extension.

The connection between the suspension members and the upper portion of the filter press may be made via a winch or the like, thereby allowing an adjustment of the free length of the respective suspension member. The adjustment allows the support surface to be oriented substantially horizontally when the supporting structure is suspended to the filter press.

According to an embodiment, the handling system may further comprise a first pulling arrangement comprising:
a first actuator being configured to be mounted to the filter press in a position opposite the supporting structure;
a first load distributing member configured to be removably connected to a first end of a subframe constituting a leading end as seen when inserting the subframe into the filter plate frame assembly; and
a load transfer member extending between the first actuator and the first load distributing member; wherein
in a condition when the supporting structure is connected to the filter press and a subframe is positioned on the support surface of the supporting structure with the first load distributing member removably connected to the first end of the subframe, an actuation of the first actuator will result in the subframe being pulled into the filter plate frame assembly while being slidingly supported by the support surface.

The first actuator may be winch. The actuator may be configured to be manually or electrically actuated. In the event of a manual actuation, this may be made by using a handle.

The first actuator may be supported by a frame which is configured to be removably connected to the filter press in a position adjacent a filter plate frame assembly containing the relevant subframe.

The load transfer member may be a belt, a wire, or a chain. No matter type, it is preferred that the load transfer member has non-elastic properties as seen in the longitudinal direction to thereby minimize elongation. It is however preferred that the load transfer member as such is collapsible, such as being foldable, formable into a loop, or rollable. It is to be understood that more than one load transfer member may be used, and that each load transfer member may have several connection points with the first load distributing member.

The first load distributing member is configured to be removably connected to the first end of the subframe. The load distributing member serves to distribute the pulling force along the longitudinal extension of the first end of the subframe to thereby avoid deformation of the subframe during pulling. By making the load distributing member removable, it will not interfere with the filter press during its ordinary use and especially not with relevant sealing surfaces in the filter plate frame assembly.

According to an embodiment, the handling system may further comprise a second pulling arrangement mounted to the supporting structure in a second end portion thereof opposite the first end portion. The second pulling arrangement may comprise:
a second actuator;
a second load distributing member configured to be removably connected to a second end of the subframe constituting a leading end as seen when retracting the subframe out of the filter plate frame assembly; and
a second load transfer member extending between the second actuator and the second load distributing member; wherein
in a condition when the supporting structure is connected to the filter press and the subframe is positioned in the filter plate frame assembly with the second load distributing member removably connected to the second end of the subframe, an actuation of the second actuator will result in the subframe being pulled out of the filter plate frame assembly while being slidingly supported by the support surface. The second actuator may be winch. The actuator may be configured to be manually or electrically actuated. In the event of a manual actuation, this may be made by using a handle.

The load transfer member may be a belt, a wire, or a chain. No matter type, it is preferred that the load transfer member has non-elastic properties as seen in the longitudinal direction to thereby minimize elongation. It is however preferred that the load transfer member as such may be collapsible, such as being foldable, formable into a loop, or rollable. It is to be understood that more than one load transfer member may be used, and that each load transfer member may have several connection points with the second load distributing member.

The load distributing member serves to distribute the pulling force along the longitudinal extension of the second end of the subframe to thereby avoid deformation of the subframe during pulling. By making the load distributing member removable, it will not interfere with the filter press during its ordinary use and especially not with relevant sealing surfaces in the filter plate frame assembly.

According to an embodiment, the first actuator and/or the second actuator may be a winch, said winch being configured to be manually or electrically actuated. In the event of being manually operated, the winch may be provided with a handle. In the event of being electrically operated, the winch may be provided with a motor.

According to an embodiment, the first and the second load distributing members may be configured to be removably connected to the first and the second ends of the subframe by a quick coupling arrangement.

The overall purpose of the load transfer distributing is to allow a distribution of the load along the end portion of the subframe as the subframe is inserted into and retracted out of the filter plate frame assembly by pulling. By using a quick coupling arrangement, the first and second load distributing members may be easily connected to and dis-connected from the subframe without the need for any tooling or separate fixing members.

The first and second load distributing members may be identical or even be used as both a first and a second load distributing member.

The load distributing member may in a non-limiting embodiment comprise a gripping portion configured to releasably grip around a lower edge portion of the first or the second end portion of the subframe, and an opposing pulling portion configured to face away from the subframe, said pulling portion supporting at least one, and preferably two quick coupling arrangements, and said pulling portion allowing connection of at least one load transfer member to the load distributing member.

According to an embodiment, the handling system may further comprise at least one supporting beam configured to support the subframe from below , and wherein each of the first and the second rails of the supporting structure comprises a longitudinally extending guiding groove, the guiding grooves being configured to slidingly receive opposite ends of the at least one supporting beam.

The at least one supporting beam serves a dual purpose. One purpose is to provide a vertical support to a diaphragm that is configured to be mounted to and supported by the subframe. The diaphragm which is typically made of rubber has a substantial inherent weight and will bulge slightly downwardly due to its weight. The provision of at least one supporting beam in the supporting structure contributes to counteract this bulging. Another purpose is to provide a support to the two opposing longitudinal side walls of the subframe as the subframe with the diaphragm mounted thereto is pulled in and out of the filter plate frame assembly. The bulging of the diaphragm may depending on the overall design of the subframe in some situations cause an elastic inward deformation of the opposing longitudinally extending side walls of the subframe, which in turn may give rise to a risk of the subframe getting stuck with the supporting structure as the subframe is pulled in and out of the filter plate frame assembly. By providing at least one supporting beam in the supporting structure and which projects vertically into the subframe and into a possible transverse contact with side walls of the subframe and also with the bottom wall of the diaphragm, the insertion and retraction of the subframe in and out of the filter plate frame assembly may be facilitated.

The guiding grooves may be integrally formed in the rails or be defined by the longitudinally extending interface between the rails and the support surface of the supporting structure.

The at least one supporting beam will be displaced along the support surface by the frictional contact between the lower surface of the diaphragm and an upper surface of the at least one supporting beam.

According to an embodiment, the support surface may comprise a throughgoing opening adjacent the first end of the supporting structure, the opening extending between the first and the second rails, thereby allowing the at least one supporting beam to fall through said opening by gravity.

The supporting structure may in an area adjacent its first end be provided with at least one stopping member configured to, if necessary, force the supporting beam in the event it has been wedged, to be released from the subframe as the subframe is inserted to the filter plate frame assembly.

According to an embodiment, a catching structure may be arranged beneath the opening in the support surface of the supporting structure. The overall purpose of the catching structure is to collect the at least one supporting beam and thereby prevent it from falling to the ground in an uncontrolled manner and pose a risk to both personnel and equipment. The catching structure may be a net, one or more straps or chains hanging in a U-shaped configuration, or even a basket or a box.

According to an embodiment, a lower surface of the at least one supporting beam may comprise a low friction member. The low friction member may be one or more wheels or rollers. The purpose is to facilitate a sliding movement between the at least one supporting beam and the support surface of the supporting structure as the subframe with its diaphragm is pulled in and out of the filter plate frame assembly.

According to another aspect, a method of performing maintenance of a subframe forming part of a filter plate frame assembly in a horizontal filter press of a tower type by using a handling system with the features according to any of claims 1-11 is provided. The method comprises the steps of:
removably connecting the first end portion of the supporting structure to the filter press in a position adjacent a filter plate frame assembly of the filter press, said filter plate frame assembly comprising a subframe supporting a diaphragm;
retracting the subframe from the filter plate frame assembly by pulling the subframe out from the filter plate frame assembly and onto the support surface of the supporting structure while the subframe being slidingly supported by the support surface;
performing a maintenance operation to the subframe and the diaphragm in a position outside the filter plate frame assembly; and
inserting the subframe into the filter plate frame assembly by pulling the subframe into the filter plate frame assembly while being slidingly supported by the support surface.

Accordingly, a method is provided that, by the use of a handling system of the type that has been described and discussed above, allows a fast and safe maintenance operation of the subframe and the diaphragm supported thereby. The supporting structure may be removably connected in a suspended manner to the filter press in an area adjacent a filter plate frame assembly which contains a subframe to be subjected to maintenance. During maintenance of the subframe, which during ordinary use is positioned in the filter plate frame assembly and hence inside the filter press, the subframe with the diaphragm supported thereby may be pulled out from the filter plate frame assembly while being slidingly supported on the support surface of the supporting structure. The subframe and the diaphragm and sealings supported by the subframe may thereby easily be inspected and maintained and if necessary be replaced in a position outside the filter press. This allows a safe working environment and with good ergonomics. After completed maintenance, the subframe with the diaphragm supported thereby may be inserted anew into the filter plate frame assembly while being slidingly supported on the support surface or the supporting structure. Further, by the suspension arrangement, the handling system may conveniently, and in a safe manner be moved from one position in the filter press adjacent a first filter plate frame assembly to a position adjacent a second filter plate frame assembly.

The details and advantages provided by the inventive handling system have been thoroughly discussed above and are equally applicable to a method of using such handling system. Thus, reference is made to the paragraphs above to avoid undue repetition.

According to an embodiment, the maintenance operation may comprise mounting, inspecting, and/or replacing the diaphragm, sealings, and/or parts of the subframe. The maintenance may either be made while the subframe is resting on the supporting surface, or the subframe may be moved to another location.

According to an embodiment, the step of retracting the subframe from the filter plate frame assembly may comprise:
removably connecting a load distributing member to an end of the subframe constituting a leading end as seen when retracting the subframe out of the filter plate frame assembly;
interconnecting the load distribution member with an actuator via a load transfer member;
actuating the actuator, thereby pulling the subframe out of the
   filter plate frame assembly while being slidingly supported by the support surface of the supporting structure.

According to an embodiment, the step of inserting the subframe into the filter plate frame assembly may comprise:
removably connecting a load distributing member to an end of the subframe constituting a leading end as seen when inserting the subframe into the filter plate frame assembly;
interconnecting the load distribution member with an actuator via a load transfer member, said actuator being mounted to the filter press in a position opposite the supporting structure;
actuating the actuator, thereby pulling the subframe into the
   filter plate frame assembly while being slidingly supported by the support surface of the supporting structure.

According to a second aspect of the disclosure, these and other objects may also be achieved, in full or at least in part, by the use of a handling system according to any of claims 1-11 to perform maintenance of a subframe and parts thereof in a horizontal filter press of a tower type.

Other objectives, features and advantages of the present disclosure will appear from the following detailed disclosure, from the attached claims, as well as from the drawings. It is noted that the disclosure relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

As used herein, the term "comprising" and variations of that term are not intended to exclude other additives, components, integers or steps.

### BRIEF DESCRIPTION OF THE DRAWINGS

The disclosure will be described in more detail with reference to the appended schematic drawings, which show an example of a presently preferred embodiment of the disclosure.
Fig. 1 is a perspective view of a filter press with one embodiment of a handling system.
Fig. 2 is a perspective view of a filter press of Fig.1 with the supporting structure supporting a subframe with a diaphragm.
Fig. 3 is a side view of the filter press of Fig. 2.
Fig. 4 is schematic view of one embodiment of a filter plate frame assembly.
Fig. 5 is a perspective view of one embodiment of the supporting structure.
Fig. 6 is a perspective view of one embodiment of the supporting beam.
Fig. 7 is a perspective view of one embodiment of the load distributing member.
Fig. 8 is a perspective view of one embodiment of the frame forming part of the first pulling arrangement.
Fig. 9 discloses the connection between the frame of the first pulling arrangement and a filter plate frame assembly.
Fig. 10A-10D disclose the method of performing maintenance of a subframe forming part of a filter plate frame assembly.

### DETAILED DESCRIPTION

The present disclosure will now be described more fully hereinafter with reference to the accompanying drawings, in which currently preferred embodiments of the disclosure are shown. The present disclosure may, however, be embodied in many different forms and should not be construed as limited to the embodiments set forth herein; rather, these embodiments are provided for thoroughness and completeness, and to fully convey the scope of the disclosure to the skilled addressee. Like reference characters refer to like elements throughout.

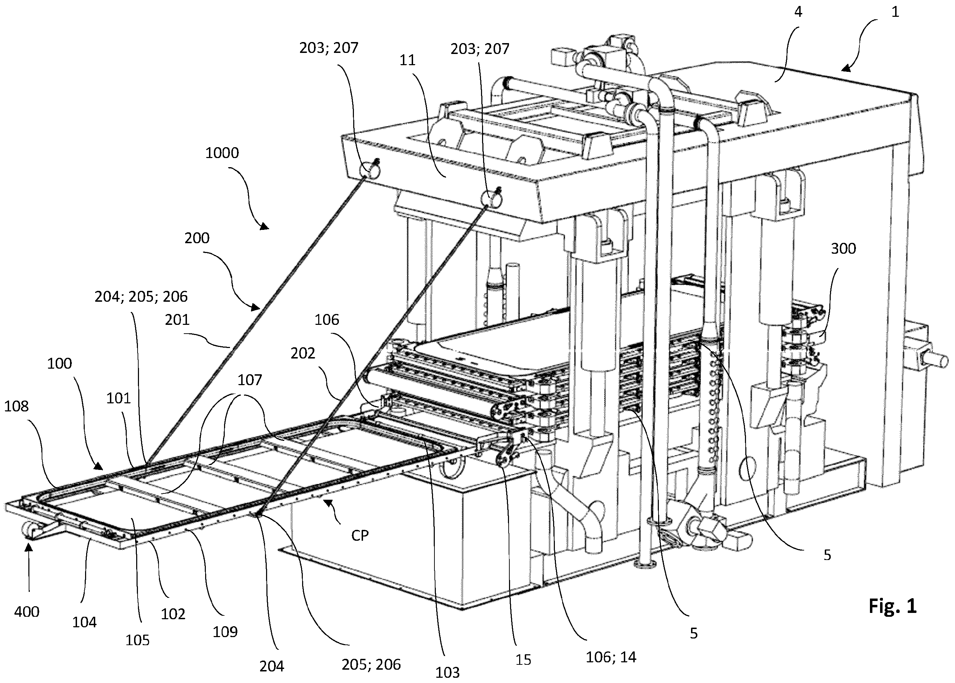

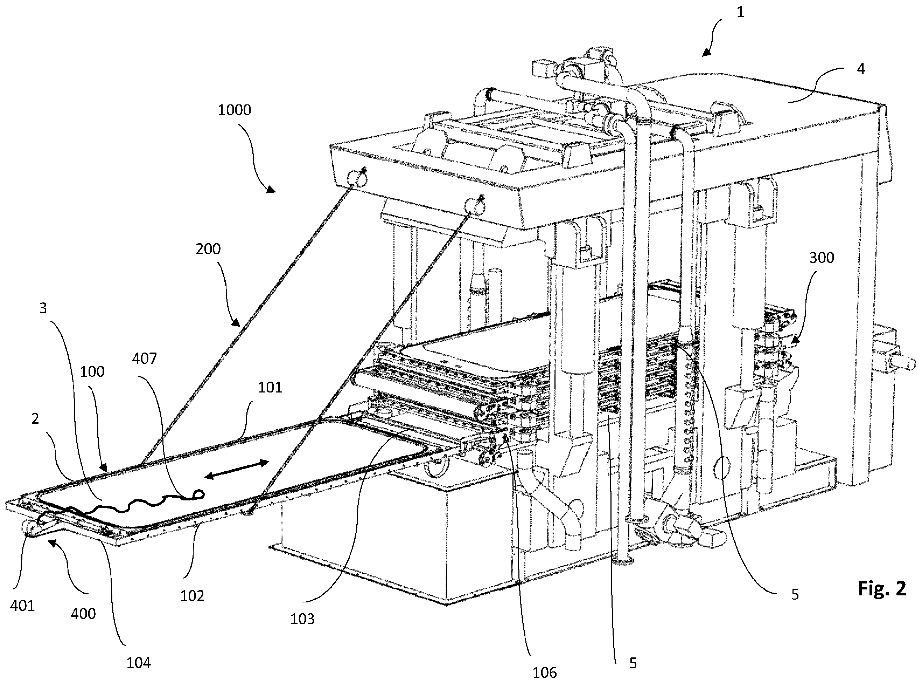

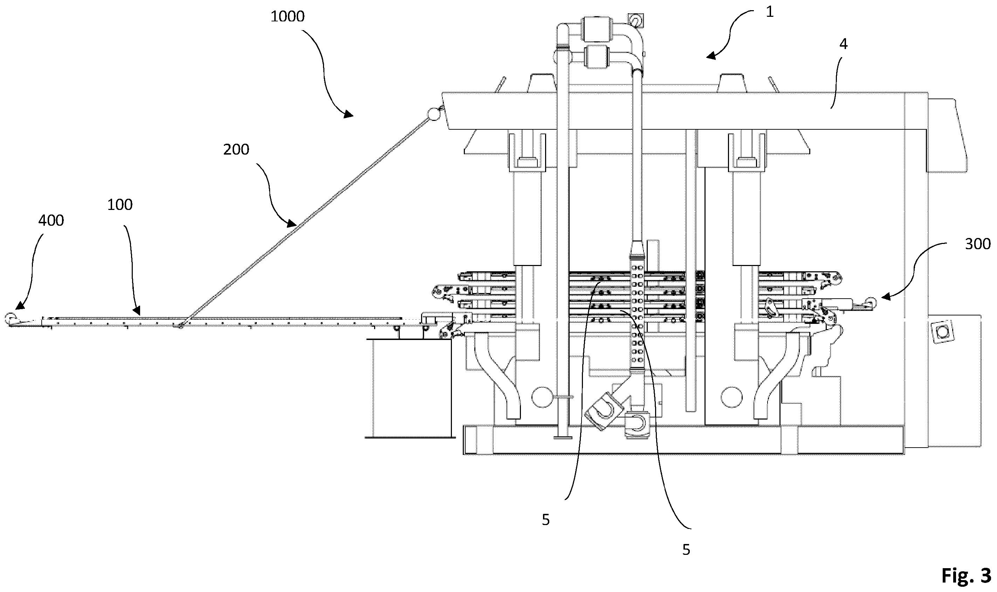

Figs. 1 and 2 respectively show a perspective view of one embodiment of a horizontal filter press 1 of the tower type provided with a handling system 1000 according to one embodiment of the invention. Fig. 3 shows a side view of the same filter press 1. The major parts of the handling system 1000 is a supporting structure 100 and a suspension arrangement 200. Figs. 1 and 2 differ from each other in that the supporting structure 100 of Fig. 1 is disclosed with the supporting structure 100 alone, whereas the supporting structure 100 of Fig. 2 is disclosed as supporting a subframe 2 with a diaphragm 3 mounted thereto. The filter press 1, which as such is well known to the skilled person and not further described, comprises a housing 4 with a plurality of superimposed filter plate frame assemblies 5.

The disclosed filter press 1 differs from the known technology in that it is provided with the inventive handling system 1000. The handling system 1000 comprises as its major components the supporting structure 100, the suspension arrangement 200 that suspends the supporting structure 100 to the filter press 1, a first pulling arrangement 300 that is used to insert a subframe 2 into one of the filter plate frame assemblies 5 and a second pulling arrangement 400 that is used to retract a subframe 2 from one of the filter plate frame assemblies 5.

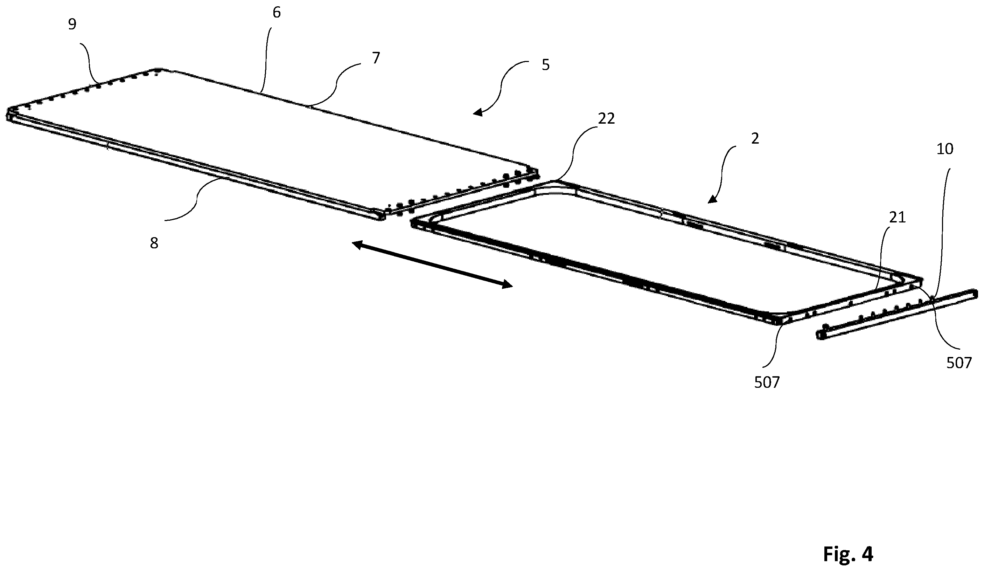

Now turning to Fig. 4, the overall design of one embodiment of an individual filter plate frame assembly 5 with a subframe 2 is disclosed. The filter plate frame assembly 5 comprises a rigid filter plate frame 6 having a first and a second opposing frame flank 7, 8. The rigid filter plate frame 6 further comprises a first and a second opposing removable frame end 9, 10. The frame flanks 7, 8 and the frame ends 9, 10 together define a closed periphery of the filter plate frame 6. Preferably but not necessarily, the filter plate frame 6 is attachable to a supporting structure of an associated filter press by the frame flanks 7, 8.

The filter plate frame assembly 5 further supports a subframe 2 which is configured to be removably nested within and laterally delimited by the filter plate frame 6. The subframe 2 has a central opening having a closed area and defining a lateral boundary of an associated filter chamber, when in use. Either or both of the first and second frame ends 9, 10 is an openable/removable frame end, such that the subframe 2, see arrow, is insertable into, and respectively, removable out from the filter plate frame 6 via the frame ends 9, 10. The subframe 2 is secured within the filter plate frame 6 when the openable frame end 9, 10 is closed. The filter plate frame 6 may be made of steel, whereas the subframe 2 may be made of a plastics material. The subframe 2 is configured to support a diaphragm (omitted in Fig. 4) that sealingly engages the circumferential edges of the subframe 2. Also, the subframe 2 may support one or more sealings (not illustrated). The sealings and the diaphragm are wear parts that need to be subjected to maintenance and if necessary, replacement on a regular basis. It is also suitable that the subframe 2 is at least inspected at the same time. This kind of maintenance operation is made by retracting the subframe 2 out of the filter plate frame assembly 5. To facilitate this operation, the invention provides a handling system 1000 which now will be described.

Now turning to Figs. 1, 2 and 5, the overall design of the handling system 1000 and its supporting structure 100 is disclosed.

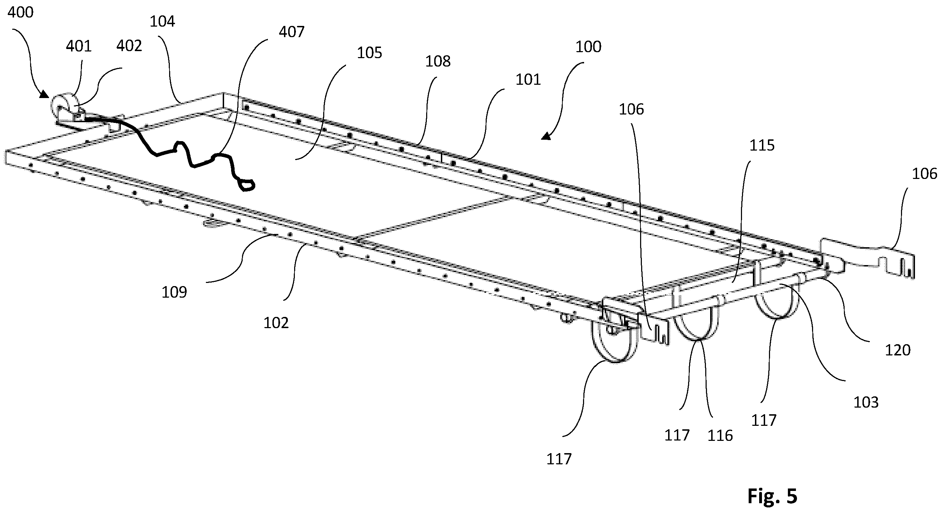

Starting with Fig. 5, the supporting structure 100 comprises a first longitudinally extending rail 101 and a second longitudinally extending rail 102, the second rail 102 being parallel to the first rail 101. The two rails 101, 102 are interconnected by a first and a second edge portion 103, 104. The two edge portions 103, 104 extend transverse to the longitudinal extension of the rails 101, 102. The first edge portion 103 is arranged in the first end 120 of the supporting structure 100, which end is configured to face the filter press 1 in a condition when the supporting structure 100 is mounted to the filter press 1. The second edge portion 104 is configured to face away from the filter press 1 in a condition when the supporting structure 100 is mounted to the filter press 1.

The first and second rails 101, 102 are interconnected with a support surface 105. The support surface 105 thereby forms a bottom of the supporting structure 100. The support surface 105 and the two rails 101, 102 are configured to slidingly support the subframe 2 when being moved in and out of a filter plate frame assembly 5, see arrow in Fig. 2.

The supporting structure 100 is in its first end 120 provided with a first and a second bracket 106. The brackets 106 are configured to allow the supporting structure 100 to be removably connected to the filter press 1 with the first end portion of the supporting structure 100 facing the filter press 1. The first and second brackets 106 are part of the suspension arrangement 200 to be described below.

The subframe 2 is, in a condition when arranged on the supporting structure 100, preferably arranged on top of at least one supporting beam 107, see Fig. 1. In the embodiment of Fig. 1, three supporting beams 107 are arranged transverse the longitudinal extension of the supporting structure 100 and extending between the two rails 101, 102. Opposite ends of the respective supporting beams 107 are configured to be slidingly received in longitudinally extending guiding grooves 108, 109 in the first and the second rails 101, 102. The guiding grooves 108, 109 may be integrally formed in the rails 101, 102. Alternatively, the guiding grooves 108, 109 may be defined by the longitudinally extending interface between the two rails 101, 102 and the support surface 105 of the supporting structure 100.

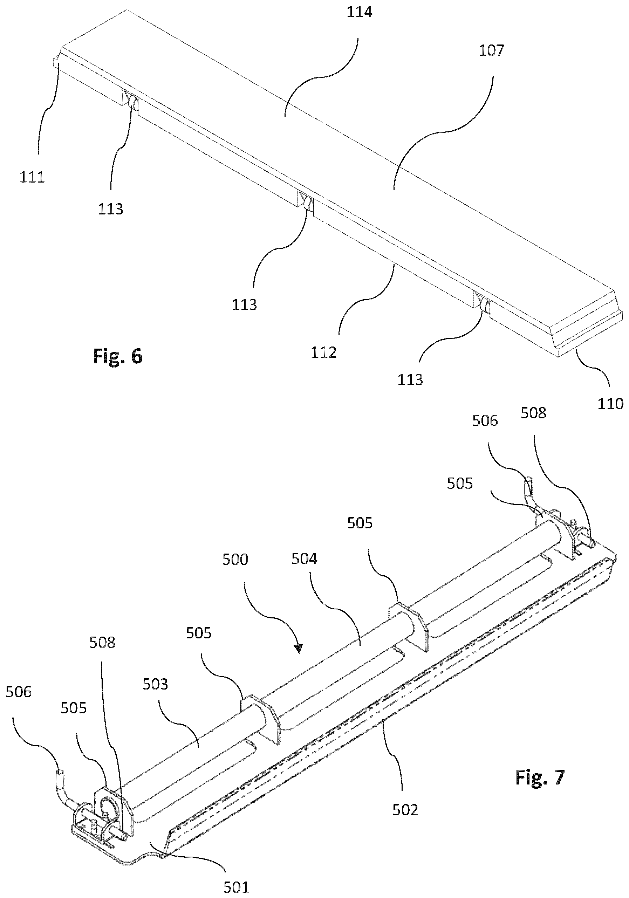

Now turning to Fig. 6, one embodiment of the supporting beam 107 is disclosed. The supporting beam 107 is in the disclosed embodiment formed as a longitudinally extending body having a length corresponding to the distance between the two opposing rails 101, 102 of the supporting structure 100. The two opposing short edges 110, 111 of the supporting beam 107 are each provided with a profile that allows them to be slidingly received in the guiding grooves 108, 109 of the supporting structure 100, see Fig. 1. The supporting beam 107 has a height that is adapted to prevent, or at least substantially restrict, a bulging of the diaphragm 3 that is supported by the subframe 2. Accordingly, in a condition when a subframe 2 with a diaphragm 3 is arranged in the supporting structure 100, the diaphragm 3 may at least partly, due to the bulging, be vertically supported by the at least one supporting beam 107.

The supporting beam 107 is preferably made of a low-weight material, such as plastic or wood.

A lower surface 112 of the supporting beam 107 is disclosed as being provided with three low-friction members 113. The skilled person realizes that any number of low-friction members may be used. They may even be omitted. The low-friction members 113 are arranged as wheels. In an alternative embodiment, they may be provided as rollers. The purpose is to facilitate a sliding movement between the at least one supporting beam 107 and the support surface 105 of the supporting structure 100 as the subframe 2 with its diaphragm 3 is pulled in and out of the filter plate frame assembly 5. The at least one supporting beam 107 will be displaced along the support surface 105 by the frictional contact between a lower surface of the diaphragm 3 and an upper surface 114 of the at least one supporting beam 107.

As is best seen in Fig. 5, the support surface 105 is provided with a throughgoing opening 115 adjacent the first edge portion 103 of the supporting structure 100. The opening 115 extends between the first and the second rails 101, 102 and has a length as seen along the longitudinal extension of the supporting structure 100 that exceeds the width of the one or more supporting beams 107. Thereby, the at least one supporting beam 107 is allowed to fall through said opening 115 by gravity.

The supporting structure 100 may in an area adjacent its first end 120 be provided with at least one optional stopping member (not illustrated) configured to, if necessary, force the supporting beam 107 to be released from the subframe 2 in the event it has been wedged to the rails.

An optional catching structure 116 is disclosed as being arranged beneath the opening 115 in the support surface 105. The overall purpose of the catching structure 116 is to collect the at least one supporting beam 107 and thereby prevent it from falling to the ground in an uncontrolled manner and pose a risk to both personnel and equipment. The catching structure 116 is disclosed as being formed by three straps 117 hanging in a U-shaped configuration. The same function may be achieved by instead using a catching structure in the form of a net, chains or even a basket or box.

Now turning to Fig. 1 anew. As given above, the handling system 1000 comprises the suspension arrangement 200. The suspension arrangement 200 is configured to allow the supporting structure 100 to be selectively and removably connected to the filter press 1 in an area adjacent an individual filter plate frame assembly 5.

The suspension arrangement 200 comprises the first and the second brackets 106 which are supported by the supporting structure 100. The brackets 106 are configured to allow the first end portion 103 of the supporting structure 100 to be removably connected to the filter press 1. The brackets 106 are configured to engage protrusions in the filter press 1 or to opposing edge portions of the filter plate frame assembly 5 of the filter press 1. Thus, no separate bolts or the like requiring the use of separate tools are required. The connection between the supporting structure 100 and the filter press 1 or the filter plate frame assembly 5 may be either fixed or hinged. In the event of a hinged connection, the supporting structure 100 may be pivoted in view of the filter press 1 or the respective filter plate frame assembly 5 to which it is mounted.

The brackets 106 are disclosed as being supported by the rails 101, 102 of the supporting structure 100. The same function may be achieved by the brackets 106 instead being supported by the support surface 105 or the first edge portion 103 of the supporting structure 100.

As is best seen in Fig. 1, the suspension arrangement 200 further comprises a first and a second suspension member 201, 202. The first and second suspension members 201, 202 may each be a belt, a wire, or a chain. No matter type, it is preferred that the suspension members 201, 202 have non-elastic properties as seen in the longitudinal direction to thereby restrict or minimize elongation. It is however preferred that the suspension members 201, 202 as such are collapsible, such as being foldable, formable into a loop, or rollable to thereby facilitate handling and stowing.

The first and the second suspension members 201, 202 do each have a first end 203 that is connected directly or indirectly to an upper portion 11 of the filter press 1 and a second end 204 that is connected to a respective longitudinally extending edge portion on opposite sides of the supporting structure 100.

The connections between the respective second ends 204 of the suspension members 201, 202 and the respective longitudinally extending edge portions of the supporting structure 100 is arranged closer to a center point CP of the respective rails 101, 102 than to the first edge portion 103 of the supporting structure 100. In the disclosed embodiment, the connection between the respective second ends 204 of the suspension members 201, 202 and the respective longitudinally extending edge portions is arranged in a position between the center point CP of the respective rail 101, 102 and a second end portion 104 of the supporting structure 100. No matter position, the connection between the respective second ends 204 of the suspension members 201, 202 and the respective longitudinally extending edge portions 101, 102 of the supporting structure 100 should be horizontally displaced in view of the momentum point of the supporting structure, i.e. the connection between the supporting structure 100 and the filter press 1.

The connections between the suspension members 201, 202 and the respective longitudinally extending edge portions of the supporting structure 100 may be made by using a connector 205 in the form of a quick coupling, such as a carbine hook, which is configured to engage a mating connection point 206 in the form of e.g. a loop on the supporting structure 100.

The suspension members 201, 202 may be provided with one or more connectors along their lengths. Alternatively, the suspension members 201, 202 may be provided with one connector 205 at their respective second ends 204. As yet another non-illustrated alternative, the respective longitudinally extending edge portions of the supporting structure 100 may be provided with one or more connection points along their longitudinal extensions.

The first ends 203 of the suspension members 201, 202 may be connected to the upper portion 11 of the filter press 1 via a winch 207. The winch 207 allows an easy adjustment of the free length of the respective suspension member 201, 202. It is preferred that the lengths of the suspension members 201, 202 are set so that the supporting structure 100 has a substantially horizontal extension when in use. The skilled person realizes that the length of the suspension members 201, 202 that is required to keep the supporting structure 100 in a horizontal position depends on which of the plurality of filter plate frame assemblies 5 of the filter press 1 that is to be serviced. The lower position of the individual filter plate frame assembly 5 as seen in the stack of superimposed filter plate frame assemblies 5 in the filter press 1, the longer lengths of the suspension members 201, 202 are required. By using a winch 207, the length may easy be adjusted. It is to be understood that one single winch may be used.

Now turning to Fig 7, one embodiment of a load distributing member 500 is disclosed. The first and second load distributing members 500A, 500B of the handling system 1000 are preferably identical, whereby only one is described in detail and is denoted by 500. The skilled person realizes that the handling system 1000 may comprise only one single load distributing member and that such single load distributing member may be releasably mounted to either end portion of the subframe, depending on if the subframe should be retracted from or be inserted into the filter plate frame assembly.

The load distributing member 500 comprises a bottom plate 501 having a longitudinal extension. The bottom plate 501 merges along one of its longitudinal edge portions with a flange which constituting a gripping portion 502. The gripping portion 502 is configured to allow the load distribution member 500 to releasably grasp around a lower edge portion of the first or the second end portions 21, 22 of the subframe 2. The gripping portion 502 is disclosed as having a continuous extension. It is to be understood that the gripping portion 502 with remained function may (in a non-illustrated embodiment) have a dis-continuous extension with a plurality of projecting fingers.

The bottom plate 501 supports a pulling portion 503. The pulling portion 503 extends in parallel with the longitudinal extension of the gripping portion 502. The pulling portion 503 is configured to face away from the subframe 2 in condition when the load distributing member 500 is mounted to the subframe 2. The pulling portion 503 is disclosed as a longitudinally extending tube 504 which is supported by the bottom plate 501 via four brackets 505 which are distributed along the longitudinal extension of the pulling portion 503. The two middle brackets 505 may be used to allow a longitudinal separation of connecting points of one or more load transfer members to be discussed below.

The bottom plate 501 supports two quick coupling arrangements 506. The quick coupling arrangements 506 are arranged on opposite ends of the bottom plate 501. The quick coupling arrangements 506 are configured to allow an easy and releasably mounting of the load distributing member 500 to the first and or second ends 21, 22 of the subframe 2 without using any tools or without any separate coupling members such as bolts or the like. The respective quick coupling member 506 is in the disclosed embodiment disclosed as a biased pin (biasing member omitted in the drawing) which as such is a well-known type of a quick coupling. The two opposing end portions of the subframe 2, see Fig 4, are each provided with mating openings 507 configured to receive the free ends of the respective pins 508 of the quick coupling members 506.

The overall purpose of the load distributing member 500 is to allow a distribution of the load along the end portion of the subframe 2 as the subframe 2 is pulled in and out of the filter plate frame assembly 5 as will be described below. The gripping portion 502 will distribute the pulling force along the longitudinal extension of the respective end portion 21, 22 of the subframe 2.

Now turning to Fig. 3, the handling system 1000 comprises the first pulling arrangement 300 and the second pulling arrangement 400. The first pulling arrangement 300 is used to allow a subframe 2 to be inserted into a filter plate frame assembly 5 of the filter press 1. The first pulling arrangement 300 is configured to be arranged on the filter press 1 on an end thereof opposite the end to which the supporting structure 100 is suspended. The second pulling arrangement 400 is used to allow a subframe 2 to be retracted out of a filter plate frame assembly 5. The second pulling arrangement 400 is at least partly supported by the supporting structure 100.

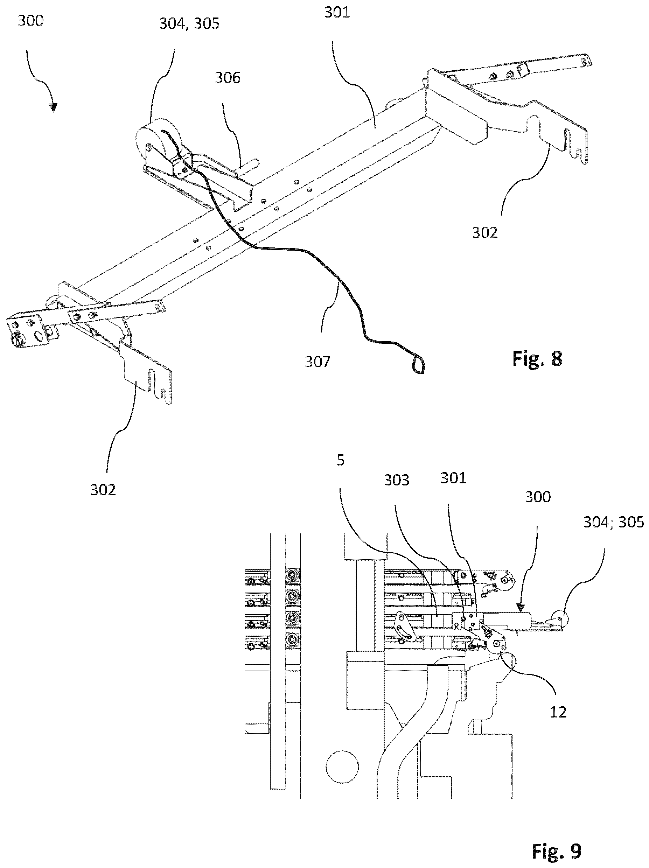

In the following, the first pulling arrangement 300 will be discussed with reference to Figs. 8 and 9. The first pulling arrangement 300 is in the disclosed embodiment configured as a frame 301 having an extension transverse to the longitudinal extension of the filter plate frame assemblies 5 of the filter press 1. The frame 301 comprises two brackets 302 in the form of hooks that are used to hingedly and releasably engage mating protrusions 303. The protrusions 303 may, as is disclosed in Fig. 9, be arranged on the filter plate frame assembly 5 into which the subframe 2 should be inserted. The skilled person realizes that the protrusions 303 with remained function may be arranged on the filter press 1 in a position adjacent each filter plate frame assembly 5.

The first pulling arrangement 300 comprises a first actuator 304. The actuator 304 is arranged in a central portion of the frame 301. The actuator 304 is formed by a winch 305. The actuator 304 is disclosed as being a manually operated winch, comprising a handle 306. The skilled person realizes that the actuator with remained function may be electrically driven by using a motor.

The first actuator 304 is configured to be operatively connected to the subframe 2 via the first load distributing member 500A which is configured to be removably connected to the first end 21 of the subframe 2, which first end constitutes a leading end as seen when the subframe 2 is to be inserted into the filter plate frame assembly 5.

The first actuator 304 is connected to the pulling portion 503 of the load distributing member 500A via a highly schematically illustrated first load transfer member 307 that is configured to extend between the first actuator 304 and the first load distributing member 500A. The load transfer member 307 may be a belt, a wire, or a chain. The load transfer member 307 may by way of example be tied to the pulling portion 503 of the first load distributing member 500A or via a looped engagement.

It is preferred that the load transfer member 307 has non-elastic properties as seen in the longitudinal direction to thereby minimize elongation during pulling. It is however preferred that the load transfer member 307 as such may be collapsible to allow it to be folded, formed into a loop, or rolled. It is to be understood that more than one load transfer member may be used, and that each load transfer member may have several connection points with the pulling portion of the first load distributing member.

The first load distributing member 500A serves to distribute the pulling force along the longitudinal extension of the first end 21 of the subframe 2 to thereby avoid deformation of the subframe 2 during pulling. By making the load distributing member removable, it will not interfere with the filter press 1 during its ordinary use and especially not with relevant sealing surfaces in the filter plate frame assembly.

As is best seen in Fig. 9, the frame of the first pulling arrangement 300 may be connected to the filter plate frame assembly 5 after having folded down a roller 12 which is configured to support a filter medium (not illustrated) during ordinary operation of the filter press 1.

Now turning to Figs. 2 and 5, the second pulling arrangement 400 will be discussed. The second pulling arrangement 400 comprises a second actuator 401 that is mounted to the supporting structure 100 in its second end portion. The second actuator 401 is disclosed as a winch. The second actuator 401 may be configured to be manually or electrically actuated. In the event of a manual actuation, this may be made by using a handle 402. The skilled person realizes that the second actuator 401 with remained function may be electrically driven, i.e., by a motor.

The second pulling arrangement 400 further comprises a second load distributing member 500B. The second load distributing member 500B may be identical with the previously described first load distribution member 500 that has been described above with reference to Fig. 7. The second load distributing member 500B is configured to be removably connected to the second end 22 of the subframe 2 which constitutes a leading end as seen when retracting the subframe 2 out of the filter plate frame assembly.

Additionally, the second pulling arrangement 400 comprises a second load transfer member 407 that is configured to extend between the second actuator 401 and the pulling portion 503 of the second load distributing member 500B. The second load transfer member 407 may be a belt, a wire, or a chain. No matter type, it is preferred that the second load transfer member 407 has non-elastic properties as seen in its longitudinal direction to thereby minimize elongation. It is however preferred that the load transfer member as such may be collapsible, to allow it to be folded, formed into a loop, or rolled. It is to be understood that more than one load transfer member may be used, and that each load transfer member may have several connection points with the pulling portion of the second load distributing member.

The second load distributing member 500B serves to distribute the pulling force along the longitudinal extension of the second end of the subframe 2 to thereby avoid deformation of the subframe 2 during pulling. By making the load distributing member removable, it will not interfere with the filter press 1 during its ordinary use and especially not with relevant sealing surfaces in the filter plate frame assembly.

In the following, the operation of the handling system 1000 according to the invention will be discussed. The operation will be exemplified in the context of a method of performing maintenance of a subframe 2 which forms part of a filter plate frame assembly 5 in a horizontal filter press of a tower type.

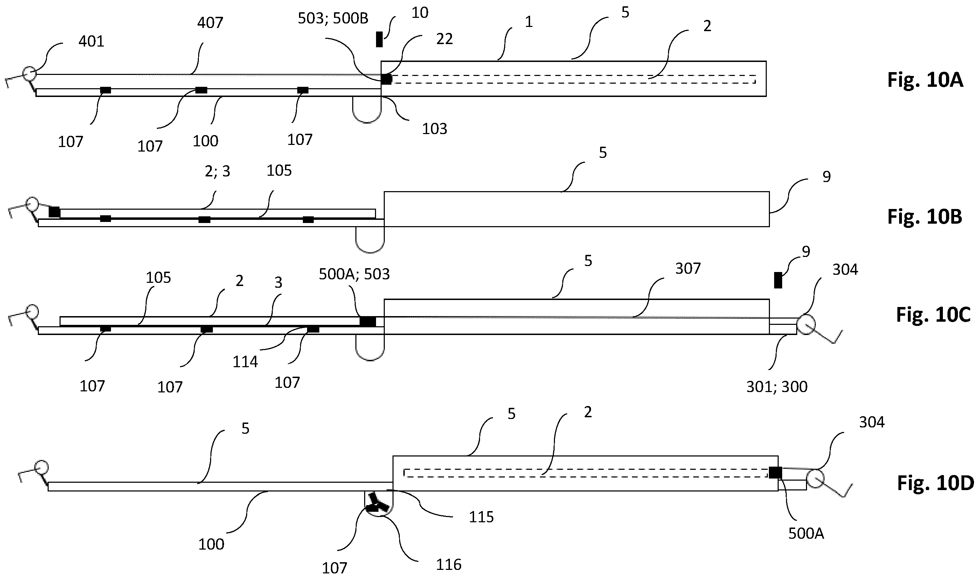

The method will be described, with reference to Figs. 10A-10D based on the situation that the filter press is provided with a filter plate frame assembly 5 which contains a subframe 2 to be maintained. The maintenance is in short made by retracting the subframe 2 from the filter plate frame assembly 5 with a sliding movement onto the supporting structure 100, performing maintenance while the subframe 2 is positioned outside the filter press, and then inserting the thus maintained subframe 2 into the filter plate frame assembly 5 while being slidingly supported by the supporting structure 100. It should be stressed that in order of getting access to the filter plate frame assembly 5 and the subframe 2 contained therein, the filter medium (not illustrated) which forms an endless loop in a zig-zag - pattern through the plurality of filter plate frame assemblies must be cut.

Now to the method. As an initial step, see Fig. 10A, the frame end 10 of the filter plate frame assembly 5 is removed. Thereby access to the second end 22 of the subframe 2 is provided, which second end constitutes a leading end as seen when retracting the subframe 2 out of the filter plate frame assembly 5.

A load distributing member 500B is removably connected to the second end 22 of the subframe 2 which is contained in the filter plate frame assembly 5. The connection is made by arranging the gripping portion of the load distributing member 500B to grasp around a lower edge portion of the second end of the subframe 2 and then operate the quick coupling arrangements of the load distributing member 500B to lockingly engage the subframe 2.

The first end portion 103 of the supporting structure 100 is removably connected to the filter press 1 in a position adjacent the relevant filter plate frame assembly 5. This is made by arranging the two brackets 106 of the supporting structure 100 to engage protrusions 14 on the filter plate frame assembly 5, see Fig.1. The supporting structure 100 may be connected to mating protrusions 14 of the filter plate frame assembly 5 after having folded down a roller 15 which is configured to support a filter medium during ordinary operation of the filter press 1.

As is best seen in Fig. 1, the respective second ends 204 of the two suspension members 201, 202 are connected to the rails 101, 102 of the supporting structure 100. The opposite, respective first ends 203 of the suspension members 201, 202 are connected to the respective winch 207 on the upper end 11 of the filter press 1. The winches 207 are operated to adjust the length of the two suspension members 201, 202 so that the support surface 105 of the supporting structure 100 is substantially horizontally arranged. The supporting structure 100 is during this adjustment allowed to pivot by the hinged engagement between the two brackets 106 and the respective protrusions 14.

One or more optional support beams 107 are arranged on the support surface 105 and with their respective opposing ends 110 in guiding engagement with the opposing guiding grooves 108, 109 of the rails 101, 102 of the supporting structure 100.

Now specifically turning to Fig. 10A. One end of the second load transferring member 407 is removably connected to the second actuator 401 and the other end is connected to the pulling portion 503 of the load distributing member 500B.

The subframe 2 is now ready to be retracted from the filter plate frame assembly 5. This is made by actuating the actuator 401. This will pull out the subframe 2 from the filter plate frame assembly 5 while being slidingly supported by the support surface 105 of the supporting structure 100. When completely pulled out, see Fig. 10B, a free access to the subframe 2 with the diaphragm 3 supported thereby is provided. The subframe 2 with its parts may now be subjected to a maintenance operation. The maintenance operation may comprise mounting, inspecting, and/or replacing the diaphragm 3, sealings, and/or parts of the subframe 2. The maintenance operation may be made while the subframe 2 is resting on the supporting surface 105. Alternatively, the subframe 2 may be moved to another location and be replaced with a new.

When the maintenance operation is finished, the subframe 2 with the diaphragm 3 is ready to be re-inserted to the filter plate frame assembly 5. This is made by the operations described below with reference to Fig. 10C.

The opposite frame end 9 of the filter plate frame assembly 5 is removed.

A first load distribution member 500A is removably connected to the first end 21 of the subframe 2 which constitutes the leading end of the subframe 2 as seen when inserting the subframe 2 into the filter plate frame assembly 5.

The connection is made by arranging the gripping portion of the load distributing member 500A to grasp around the lower edge portion of the end portion of the subframe 2 and then operate the two quick coupling arrangements of the load distributing member 500A to lockingly engage the subframe 2.

The frame 301 which forms part of the first pulling arrangement 300 is now connected to the opposite side of the filter press in a position adjacent or directly to the filter plate frame assembly 5 into which the subframe 2 should be inserted. One end of the first load transferring member 307 is removably connected to the first actuator 304 and the other end is connected to the pulling portion 503 of the load distributing member 500A.

The subframe 2 is now ready to be inserted into the filter plate frame assembly, i.e., the position disclosed in Fig. 10D. This is made by actuating the first actuator 304 which will pull the subframe 2 into the filter plate frame assembly 5 while being slidingly supported by the support surface 105 of the supporting structure 100 and the optional at least one supporting beam 107.

As the subframe 2 is pulled into the filter plate frame assembly 5, the bottom wall of the diaphragm 3 may be in contact with the at least one supporting beam 107. The skilled person realizes that the presence of any contact between the diaphragm 3 and the at least one supporting beam 107 depends on parameters such as inherent stiffness of the diaphragm. The at least one supporting beam 107 will be slidingly displaced along the support surface 105 by the frictional contact between the bottom wall of the diaphragm 3 and the upper surface 114 of the at least one supporting beam 107. As the at least one supporting beam 107 reaches the through opening 115 in the supporting surface 105, it will fall down by gravity and be collected in the optional catching structure 116 that may be arranged beneath the opening 115 in the supporting structure 100. Thus, the catching structure 116 collects the at least one supporting beam 107 and prevents it from falling to the ground in an uncontrolled manner and pose a risk to both personnel and equipment.

When the subframe 2 is completely inserted into the filter plate frame assembly, see Fig. 10D, the first load transferring member 500A is removed from the subframe 2. Also, the two opposing frame ends 9, 10 of the filter plate frame assembly 5 are re-mounted to the filter plate frame assembly.

The complete process is now ready to be repeated by disconnecting and removing the supporting structure 100 and the first pulling arrangement 300 from the now maintained filter plate frame assembly 5 and instead re-mounted to one of the other filter plate frame assemblies which are arranged in the filter press 1.

The skilled person realises that a number of modifications of the embodiments described herein are possible without departing from the scope of the disclosure, which is defined in the appended claims.

As an alternative to the supporting structure being provided with guiding grooves 108, 109 for guiding the at least one supporting beam 107, the skilled person realizes that the support surface 105 may comprise at least one longitudinally extending guiding member configured to slidingly engage a complementary guiding member in the lower surface of the at least one supporting beam. The complementary guiding members may by way of example be formed as a groove and a protrusion such as a rail.

The first and second suspension members extending between the filter press and the supporting structure, and the related one or more winches, may be omitted. Instead, the supporting structure may be supported from below by one or more adjustable legs, a forklift, a sax lift or the like. It may even be supported from above via a traverse.

## Claims

1. A handling system (1000) of a subframe (2) forming part of a filter plate frame assembly (5) in a horizontal filter press (1) of a tower type, said handling system (1000) comprising a supporting structure (100) and a suspension arrangement (200), wherein
the supporting structure (100) comprises a first longitudinally extending rail (101) and a second longitudinally extending rail (102) parallel to the first rail, the first and second rails (101, 102) being interconnected with a support surface (105), wherein the support surface (105) and the first and second rails (101; 102) are configured to slidingly support a subframe (2) when the subframe is moved in and out of the filter plate frame assembly (5); and
the suspension arrangement (200) is arranged in a first end portion of the supporting structure (100), the first end portion extending transverse to the longitudinal extension of the first and second rails (101, 102), the suspension arrangement (200) being configured to allow the supporting structure (100) to be selectively and removably connected to the filter press (1) in an area adjacent a filter plate frame assembly (5), **characterized in that**
the suspension arrangement (200) comprises a first and a second suspension member (201, 202), the first suspension member (201) having a first end (203) being configured to be connected directly or indirectly to an upper portion (11) of the filter press (1) and a second end (204) being configured to be connected to a first longitudinally extending edge portion of the supporting structure (100); and the second suspension member (202) having a first end (203) being configured to be connected directly or indirectly to the upper portion (11) of the filter press (1) and a second end (204) being configured to be connected to a second longitudinally extending edge portion of the supporting structure (100).

2. The handling system according to claim 1, wherein the suspension arrangement (200) further comprises a first and a second bracket (106) supported by the supporting structure (100), the brackets (106) being configured to allow the first end portion (103) of the supporting structure (100) to be connected to the filter press (1) in a position adjacent the filter plate frame assembly (5).

3. The handling system according to claim 1 or 2, wherein the connection between the respective second ends of the suspension members (201, 202) and the respective longitudinally extending edge portion is arranged closer to a center point (CP) of the respective rail (101, 102) than to the first end portion (103) of the supporting structure (100).

4. The handling system of any of the preceding claims, further comprising a first pulling arrangement (300) comprising:
a first actuator (304) being configured to be mounted to the filter press (1) in a position opposite the supporting structure (100),
a first load distributing member (500A) configured to be removably connected to a first end (21) of a subframe (2) constituting a leading end as seen when inserting the subframe (2) into the filter plate frame assembly (5); and
a load transfer member (307) extending between the first actuator (304) and the first load distributing member (500A); wherein
in a condition when the supporting structure (100) is connected to the filter press (1) and a subframe (2) is positioned on the support surface (105) of the supporting structure (100) with the first load distributing member (500A) removably connected to the first end of the subframe (2), an actuation of the first actuator (304) will result in the subframe (2) being pulled into the filter plate frame assembly (5) while being slidingly supported by the support surface (105).

5. The handling system of any of the preceding claims, further comprising
a second pulling arrangement (400) mounted to the supporting structure (100) in a second end portion thereof opposite the first end portion, the second pulling arrangement (400) comprising:
a second actuator (401);
a second load distributing member (500B) configured to be removably connected to a second end (22) of the subframe (2) constituting a leading end as seen when retracting the subframe (2) out of the filter plate frame assembly (5); and
a second load transfer member (407) extending between the second actuator (401) and the second load distributing member (500B); wherein
in a condition when the supporting structure (100) is connected to the filter press (1) and the subframe (2) is positioned in the filter plate frame assembly (5) with the second load distributing member (500B) removably connected to the second end of the subframe (2), an actuation of the second actuator (401) will result in the subframe (2) being pulled out of the filter plate frame assembly (5) while being slidingly supported by the support surface (105).

6. The handling system according to claim 4 or 5, wherein the first actuator (304) and/or the second actuator (401) is a winch, said winch being configured to be manually or electrically actuated.

7. The handling system according to claim 4 or 5, wherein the first and the second load distributing members (500A, 500B) are configured to be removably connected to the first and the second ends (21, 22) of the subframe (2) by a quick coupling arrangement (506).

8. The handling system according to any of the preceding claims, wherein
the handling system (1000) further comprises at least one supporting beam (107) configured to support the subframe (2) from below, and wherein each of the first and the second rails (101, 102) of the supporting structure (100) comprises a longitudinally extending guiding groove (108, 109), the guiding grooves (108, 109) being configured to slidingly receive opposite ends (110, 111) of the at least one supporting beam (107).

9. The handling system according to claim 8, wherein the support surface (105) comprises a throughgoing opening (115) adjacent the first end of the supporting structure (100), the opening (115) extending between the first and the second rails (101, 102), thereby allowing the at least one supporting beam (107) to fall through said opening (115) by gravity.

10. The handling system according to claim 9, wherein a catching structure (116) is arranged beneath the opening (115) in the support surface (105) of the supporting structure (100).

11. The handling system according to any of claims 8-10, wherein a lower surface (112) of the at least one supporting beam (107) comprises a low friction member (113).

12. A method of performing maintenance of a subframe (2) forming part of a filter plate frame assembly (5) in a horizontal filter press (1) of a tower type by using a handling system (1000) with the features according to any of claims 1-11; the method being **characterized in that** it comprises the steps of:
removably connecting the first end portion of the supporting structure (100) to the filter press (1) in a position adjacent a filter plate frame assembly (5) of the filter press (1), said filter plate frame assembly (5) comprising a subframe (2) supporting a diaphragm (3);
retracting the subframe (2) from the filter plate frame assembly (5) by pulling the subframe (2) out from the filter plate frame assembly (5) and onto the support surface (105) of the supporting structure (100) while the subframe (2) being slidingly supported by the support surface (105);
performing a maintenance operation to the subframe (2) and the diaphragm (3) in a position outside the filter plate frame assembly (5); and
inserting the subframe (2) into the filter plate frame assembly (5) by pulling the subframe (2) into the filter plate frame assembly (5) while being slidingly supported by the support surface (105).

13. The method of claim 12, wherein the maintenance operation comprises mounting, inspecting, and/or replacing the diaphragm (3), sealings, and/or parts of the subframe (2).

14. The method of any of claims 12-13, wherein the step of retracting the subframe (2) from the filter plate frame assembly (5) comprises:
removably connecting a load distributing member (500B) to an end of the subframe (2) constituting a leading end as seen when retracting the subframe (2) out of the filter plate frame assembly;
interconnecting the load distribution member (500) with an actuator (401) via a load transfer member (407);
actuating the actuator (401), thereby pulling the subframe (2) out of the filter plate frame assembly (5) while being slidingly supported by the support surface (105) of the supporting structure (100).

15. The method of any of claims 12-13, wherein the step of inserting the subframe (2) into the filter plate frame assembly (5) comprises:
removably connecting a load distributing member (500A) to an end of the subframe (2) constituting a leading end as seen when inserting the subframe (2) into the filter plate frame assembly (5);
interconnecting the load distribution member (500) with an actuator (304) via a load transfer member (307), said actuator (304) being mounted to the filter press (1) in a position opposite the supporting structure (100);
actuating the actuator (304), thereby pulling the subframe (2) into the filter plate frame assembly (5) while being slidingly supported by the support surface (105) of the supporting structure (100).

16. Use of a handling system (1000) according to any of claims 1-11 to perform maintenance of a subframe (2) and parts thereof in a horizontal filter press (1) of a tower type.

## Patentansprüche

1. Handhabungssystem (1000) eines Teilrahmens (2), das Teil einer Filterplattenrahmenanordnung (5) in einer horizontalen Filterpresse (1) eines Turmtyps bildet, wobei das Handhabungssystem (1000) eine Tragstruktur (100) und eine Aufhängeanordnung (200) umfasst, wobei
die Tragstruktur (100) eine erste sich in Längsrichtung erstreckende Schiene (101) und eine zweite sich in Längsrichtung erstreckende Schiene (102) parallel zu der ersten Schiene umfasst, wobei die erste und die zweite Schiene (101, 102) mit einer Stützfläche (105) miteinander verbunden sind, wobei die Stützfläche (105) und die erste und die zweite Schiene (101; 102) dazu ausgelegt sind, einen Teilrahmen (2) gleitend zu tragen, wenn der Teilrahmen in die Filterplattenrahmenanordnung (5) hinein und aus dieser heraus bewegt wird; und
die Aufhängeanordnung (200) in einem ersten Endabschnitt der Tragstruktur (100) angeordnet ist, wobei der erste Endabschnitt sich quer zur Längserstreckung der ersten und der zweiten Schiene (101, 102) erstreckt, wobei die Aufhängeanordnung (200) dazu ausgelegt ist, es zu ermöglichen, dass die Tragstruktur (100) wahlweise und lösbar mit der Filterpresse (1) in einem Bereich benachbart zu einer Filterplattenrahmenanordnung (5) verbunden wird, **dadurch gekennzeichnet, dass**
die Aufhängeanordnung (200) ein erstes und ein zweites Aufhängeelement (201, 202) umfasst, wobei das erste Aufhängeelement (201) ein erstes Ende (203) aufweist, das dazu ausgelegt ist, direkt oder indirekt mit einem oberen Abschnitt (11) der Filterpresse (1) verbunden zu werden, und ein zweites Ende (204), das dazu ausgelegt ist, mit einem ersten sich in Längsrichtung erstreckenden Randabschnitt der Tragstruktur (100) verbunden zu werden; und wobei das zweite Aufhängeelement (202) ein erstes Ende (203) aufweist, das dazu ausgelegt ist, direkt oder indirekt mit dem oberen Abschnitt (11) der Filterpresse (1) verbunden zu werden, und ein zweites Ende (204), das dazu ausgelegt ist, mit einem zweiten sich in Längsrichtung erstreckenden Randabschnitt der Tragstruktur (100) verbunden zu werden.

2. Handhabungssystem nach Anspruch 1, wobei die Aufhängeanordnung (200) ferner eine erste und eine zweite Halterung (106) umfasst, die von der Tragstruktur (100) getragen sind, wobei die Halterungen (106) dazu ausgelegt sind, es zu ermöglichen, dass der erste Endabschnitt (103) der Tragstruktur (100) mit der Filterpresse (1) in einer Position benachbart zu der Filterplattenrahmenanordnung (5) verbunden wird.

3. Handhabungssystem nach Anspruch 1 oder 2, wobei die Verbindung zwischen den jeweiligen zweiten Enden der Aufhängeelemente (201, 202) und dem jeweiligen sich in Längsrichtung erstreckenden Randabschnitt näher an einem Mittelpunkt (CP) der jeweiligen Schiene (101, 102) als an dem ersten Endabschnitt (103) der Tragstruktur (100) angeordnet ist.

4. Handhabungssystem nach einem der vorhergehenden Ansprüche, ferner umfassend eine erste Zuganordnung (300), umfassend:
einen ersten Aktuator (304), der dazu ausgelegt ist, an der Filterpresse (1) in einer der Tragstruktur (100) gegenüberliegenden Position montiert zu werden,
ein erstes Lastverteilungselement (500A), das dazu ausgelegt ist, lösbar mit einem ersten Ende (21) eines Teilrahmens (2) verbunden zu werden, das ein vorderes Ende bildet, gesehen beim Einführen des Teilrahmens (2) in die Filterplattenrahmenanordnung (5); und
ein Lastübertragungselement (307), das sich zwischen dem ersten Aktuator (304) und dem ersten Lastverteilungselement (500A) erstreckt; wobei
in einem Zustand, in dem die Tragstruktur (100) mit der Filterpresse (1) verbunden ist und ein Teilrahmen (2) auf der Stützfläche (105) der Tragstruktur (100) positioniert ist, wobei das erste Lastverteilungselement (500A) lösbar mit dem ersten Ende des Teilrahmens (2) verbunden ist, eine Betätigung des ersten Aktuators (304) dazu führt, dass der Teilrahmen (2) in die Filterplattenrahmenanordnung (5) hineingezogen wird, während er durch die Stützfläche (105) gleitend getragen wird.

5. Handhabungssystem nach einem der vorhergehenden Ansprüche, ferner umfassend:
eine zweite Zuganordnung (400), die an der Tragstruktur (100) in einem zweiten Endabschnitt derselben gegenüber dem ersten Endabschnitt montiert ist, wobei die zweite Zuganordnung (400) umfasst:
einen zweiten Aktuator (401);
ein zweites Lastverteilungselement (500B), das dazu ausgelegt ist, lösbar mit einem zweiten Ende (22) des Teilrahmens (2) verbunden zu werden, das ein vorderes Ende bildet, gesehen beim Herausziehen des Teilrahmens (2) aus der Filterplattenrahmenanordnung (5); und
ein zweites Lastübertragungselement (407), das sich zwischen dem zweiten Aktuator (401) und dem zweiten Lastverteilungselement (500B) erstreckt; wobei
in einem Zustand, in dem die Tragstruktur (100) mit der Filterpresse (1) verbunden ist und der Teilrahmen (2) in der Filterplattenrahmenanordnung (5) positioniert ist, wobei das zweite Lastverteilungselement (500B) lösbar mit dem zweiten Ende des Teilrahmens (2) verbunden ist, eine Betätigung des zweiten Aktuators (401) dazu führt, dass der Teilrahmen (2) aus der Filterplattenrahmenanordnung (5) herausgezogen wird, während er durch die Stützfläche (105) gleitend getragen wird.

6. Handhabungssystem nach Anspruch 4 oder 5, wobei der erste Aktuator (304) und/oder der zweite Aktuator (401) eine Winde ist, wobei die Winde dazu ausgelegt ist, manuell oder elektrisch betätigt zu werden.

7. Handhabungssystem nach Anspruch 4 oder 5, wobei das erste und das zweite Lastverteilungselement (500A, 500B) dazu ausgelegt sind, lösbar mit dem ersten und dem zweiten Ende (21, 22) des Teilrahmens (2) mittels einer Schnellkupplungsanordnung (506) verbunden zu werden.

8. Handhabungssystem nach einem der vorhergehenden Ansprüche, wobei das Handhabungssystem (1000) ferner mindestens einen Stützträger (107) umfasst, der dazu ausgelegt ist, den Teilrahmen (2) von unten zu stützen, und wobei jede der ersten und der zweiten Schiene (101, 102) der Tragstruktur (100) eine sich in Längsrichtung erstreckende Führungsnut (108, 109) umfasst, wobei die Führungsnuten (108, 109) dazu ausgelegt sind, gegenüberliegende Enden (110, 111) des mindestens einen Stützträgers (107) gleitend aufzunehmen.

9. Handhabungssystem nach Anspruch 8, wobei die Stützfläche (105) eine durchgehende Öffnung (115) benachbart zu dem ersten Endabschnitt der Tragstruktur (100) umfasst, wobei sich die Öffnung (115) zwischen der ersten und der zweiten Schiene (101, 102) erstreckt, wodurch es ermöglicht wird, dass der mindestens eine Stützträger (107) durch Schwerkraft durch die Öffnung (115) hindurchfällt.

10. Handhabungssystem nach Anspruch 9, wobei eine Auffanganordnung (116) unterhalb der Öffnung (115) in der Stützfläche (105) der Tragstruktur (100) angeordnet ist.

11. Handhabungssystem nach einem der Ansprüche 8-10, wobei eine Unterseite (112) des mindestens einen Stützträgers (107) ein reibungsarmes Element (113) umfasst.

12. Verfahren zum Durchführen einer Wartung eines Teilrahmens (2), der Teil einer Filterplattenrahmenanordnung (5) bildet, in einer horizontalen Filterpresse (1) eines Turmtyps unter Verwendung eines Handhabungssystems (1000) mit den Merkmalen nach einem der Ansprüche 1-11;, wobei das Verfahren **dadurch gekennzeichnet ist, dass** es die folgenden Schritte umfasst:
lösbares Verbinden des ersten Endabschnitts der Tragstruktur (100) mit der Filterpresse (1) in einer Position benachbart zu einer Filterplattenrahmenanordnung (5) der Filterpresse (1), wobei die Filterplattenrahmenanordnung (5) einen Teilrahmen (2) umfasst, der eine Membran (3) trägt;
Herausziehen des Teilrahmens (2) aus der Filterplattenrahmenanordnung (5), indem der Teilrahmen (2) aus der Filterplattenrahmenanordnung (5) heraus und auf die Stützfläche (105) der Tragstruktur (100) gezogen wird, während der Teilrahmen (2) durch die Stützfläche (105) gleitend getragen wird;
Durchführen eines Wartungsvorgangs an dem Teilrahmen (2) und der Membran (3) in einer Position außerhalb der Filterplattenrahmenanordnung (5); und
Einführen des Teilrahmens (2) in die Filterplattenrahmenanordnung (5), indem der Teilrahmen (2) in die Filterplattenrahmenanordnung (5) hineingezogen wird, während er durch die Stützfläche (105) gleitend getragen wird.

13. Verfahren nach Anspruch 12, wobei der Wartungsvorgang Montieren, Prüfen und/oder Ersetzen der Membran (3), Dichtungen und/oder Teile des Teilrahmens (2) umfasst.

14. Verfahren nach einem der Ansprüche 12 bis 13, wobei der Schritt des Herausziehens des Teilrahmens (2) aus der Filterplattenrahmenanordnung (5) umfasst:
lösbares Verbinden eines Lastverteilungselements (500B) mit einem Ende des Teilrahmens (2), das ein vorderes Ende bildet, gesehen beim Herausziehen des Teilrahmens (2) aus der Filterplattenrahmenanordnung;
Verbinden des Lastverteilungselements (500) mit einem Aktuator (401) über ein Lastübertragungselement (407);
Betätigen des Aktuators (401), wodurch der Teilrahmen (2) aus der Filterplattenrahmenanordnung (5) herausgezogen wird, während er durch die Stützfläche (105) der Tragstruktur (100) gleitend getragen wird.

15. Verfahren nach einem der Ansprüche 12-13, wobei der Schritt des Einführens des Teilrahmens (2) in die Filterplattenrahmenanordnung (5) umfasst:
lösbares Verbinden eines Lastverteilungselements (500A) mit einem Ende des Teilrahmens (2), das ein vorderes Ende bildet, gesehen beim Einführen des Teilrahmens (2) in die Filterplattenrahmenanordnung (5);
Verbinden des Lastverteilungselements (500) mit einem Aktuator (304) über ein Lastübertragungselement (307), wobei der Aktuator (304) an der Filterpresse (1) in einer der Tragstruktur (100) gegenüberliegenden Position montiert ist;
Betätigen des Aktuators (304), wodurch der Teilrahmen (2) in die Filterplattenrahmenanordnung (5) hineingezogen wird, während er durch die Stützfläche (105) der Tragstruktur (100) gleitend getragen wird.

16. Verwendung eines Handhabungssystems (1000) nach einem der Ansprüche 1-11 zum Durchführen einer Wartung eines Teilrahmens (2) und von Teilen davon in einer horizontalen Filterpresse (1) eines Turmtyps.

## Revendications

1. Système de manipulation (1000) d'un cadre auxiliaire (2) faisant partie d'un ensemble cadre de plateau filtrant (5) dans un filtre-presse horizontal (1) du type tour, ledit système de manipulation (1000) comprenant une structure de support (100) et un dispositif de suspension (200),
la structure de support (100) comprenant un premier rail (101) s'étendant longitudinalement et un second rail (102) s'étendant longitudinalement, parallèle au premier rail, les premier et second rails (101, 102) étant reliés à une surface de support (105), la surface de support (105) et les premier et second rails (101 ; 102) étant conçus pour supporter de manière coulissante un cadre auxiliaire (2) lorsque le cadre auxiliaire est inséré dans l'ensemble cadre de plateau filtrant (5) et extrait de celui-ci ; et
le dispositif de suspension (200) étant disposé dans une première partie d'extrémité de la structure de support (100), la première partie d'extrémité s'étendant transversalement à l'extension longitudinale des premier et second rails (101, 102), le dispositif de suspension (200) étant conçu pour permettre le raccordement de la structure de support (100) au filtre-presse (1) de manière sélective et amovible dans une région adjacente à un ensemble cadre de plateau filtrant (5), **caractérisé en ce que**
le dispositif de suspension (200) comprend des premier et second éléments de suspension (201, 202), le premier élément de suspension (201) ayant une première extrémité (203) conçue pour être reliée directement ou indirectement à une partie supérieure (11) du filtre-presse (1) et une seconde extrémité (204) conçue pour être reliée à une première partie de bord s'étendant longitudinalement de la structure de support (100) ; et le second élément de suspension (202) ayant une première extrémité (203) conçue pour être reliée directement ou indirectement à la partie supérieure (11) du filtre-presse (1) et une seconde extrémité (204) conçue pour être reliée à une seconde partie de bord s'étendant longitudinalement de la structure de support (100).

2. Système de manipulation selon la revendication 1, dans lequel le dispositif de suspension (200) comprend en outre des première et seconde pièces d'assemblage (106) supportées par la structure de support (100), les pièces d'assemblage (106) étant conçues pour permettre le raccordement de la première partie d'extrémité (103) de la structure de support (100) au filtre-presse (1) dans une position adjacente à l'ensemble cadre de plateau filtrant (5).

3. Système de manipulation selon la revendication 1 ou 2, dans lequel le raccordement entre les secondes extrémités respectives des éléments de suspension (201, 202) et la partie de bord s'étendant longitudinalement respective se trouve plus près d'un point central (CP) du rail respectif (101, 102) que de la première partie d'extrémité (103) de la structure de support (100).

4. Système de manipulation selon l'une quelconque des revendications précédentes, comprenant en outre un premier dispositif de traction (300) comprenant :
un premier actionneur (304) conçu pour être monté sur le filtre-presse (1) dans une position à l'opposé de la structure de support (100),
un premier élément de répartition de charge (500A) conçu pour être relié de manière amovible à une première extrémité (21) d'un cadre auxiliaire (2) constituant une extrémité avant lors de l'insertion du cadre auxiliaire (2) dans l'ensemble cadre de plateau filtrant (5) ; et un élément de transfert de charge (307) s'étendant entre le premier actionneur (304) et le premier élément de répartition de charge (500A) ; dans lequel
lorsque la structure de support (100) est reliée au filtre-presse (1) et qu'un cadre auxiliaire (2) est positionné sur la surface de support (105) de la structure de support (100), le premier élément de répartition de charge (500A) étant relié de manière amovible à la première extrémité du cadre auxiliaire (2), un actionnement du premier actionneur (304) entraîne une traction du cadre auxiliaire (2) dans l'ensemble cadre de plateau filtrant (5) tandis qu'il est supporté de manière coulissante par la surface de support (105).

5. Système de manipulation selon l'une quelconque des revendications précédentes, comprenant en outre :
un second dispositif de traction (400) monté sur la structure de support (100) dans une seconde partie d'extrémité de celle-ci opposée à la première partie d'extrémité, le second dispositif de traction (400) comprenant :
un second actionneur (401) ;
un second élément de répartition de charge (500B) conçu pour être relié de manière amovible à une seconde extrémité (22) du cadre auxiliaire (2) constituant une extrémité avant lors de l'extraction du cadre auxiliaire (2) hors de l'ensemble cadre de plateau filtrant (5) ; et
un second élément de transfert de charge (407) s'étendant entre le second actionneur (401) et le second élément de répartition de charge (500B) ; dans lequel
lorsque la structure de support (100) est reliée au filtre-presse (1) et que le cadre auxiliaire (2) est positionné dans l'ensemble cadre de plateau filtrant (5), le second élément de répartition de charge (500B) étant relié de manière amovible à la seconde extrémité du cadre auxiliaire (2), un actionnement du second actionneur (401) entraîne une traction du cadre auxiliaire (2) hors de l'ensemble cadre de plateau filtrant (5) tandis qu'il est supporté de manière coulissante par la surface de support (105).

6. Système de manipulation selon la revendication 4 ou 5, dans lequel le premier actionneur (304) et/ou le second actionneur (401) sont un treuil, ledit treuil étant conçu pour être actionné manuellement ou électriquement.

7. Système de manipulation selon la revendication 4 ou 5, dans lequel les premier et second éléments de répartition de charge (500A, 500B) sont conçus pour être reliés de manière amovible aux première et seconde extrémités (21, 22) du cadre auxiliaire (2) par un dispositif d'accouplement rapide (506).

8. Système de manipulation selon l'une quelconque des revendications précédentes, le système de manipulation (1000) comprenant en outre au moins une poutre de support (107) conçue pour supporter le cadre secondaire (2) par le dessous, et dans lequel chacun des premier et second rails (101, 102) de la structure de support (100) comprend une rainure de guidage (108, 109) s'étendant longitudinalement, les rainures de guidage (108, 109) étant conçues pour recevoir de manière coulissante des extrémités opposées (110, 111) de l'au moins une poutre de support (107).

9. Système de manipulation selon la revendication 8, dans lequel la surface de support (105) comprend une ouverture traversante (115) adjacente à la première extrémité de la structure de support (100), l'ouverture (115) s'étendant entre les premier et second rails (101, 102), permettant ainsi à l'au moins une poutre de support (107) de tomber à travers ladite ouverture (115) par gravité.

10. Système de manipulation selon la revendication 9, dans lequel une structure de collecte (116) est placée sous l'ouverture (115) dans la surface de support (105) de la structure de support (100).

11. Système de manipulation selon l'une quelconque des revendications 8 à 10, dans lequel une surface inférieure (112) de l'au moins une poutre de support (107) comprend un élément à faible frottement (113).

12. Procédé pour effectuer l'entretien d'un cadre auxiliaire (2), faisant partie d'un ensemble cadre de plateau filtrant (5) dans un filtre-presse horizontal (1) du type tour, au moyen d'un système de manipulation (1000) présentant les caractéristiques selon l'une quelconque des revendications 1 à 11 ; le procédé étant **caractérisé en ce qu'**il comprend les étapes suivantes :
relier de manière amovible la première partie d'extrémité de la structure de support (100) au filtre-presse (1) dans une position adjacente à un ensemble cadre de plateau filtrant (5) du filtre-presse (1), ledit ensemble cadre de plateau filtrant (5) comprenant un cadre auxiliaire (2) supportant une membrane (3) ;
extraire le cadre auxiliaire (2) de l'ensemble cadre de plateau filtrant (5) en tirant le cadre auxiliaire (2) hors de l'ensemble cadre de plateau filtrant (5) et en le plaçant sur la surface de support (105) de la structure de support (100) tandis que le cadre auxiliaire (2) est supporté de manière coulissante par la surface de support (105) ;
effectuer une opération d'entretien sur le cadre auxiliaire (2) et la membrane (3) dans une position à l'extérieur de l'ensemble cadre de plateau filtrant (5) ; et
insérer le cadre auxiliaire (2) dans l'ensemble cadre de plateau filtrant (5) en tirant le cadre auxiliaire (2) dans l'ensemble cadre de plateau filtrant (5) tandis qu'il est supporté de manière coulissante par la surface de support (105).

13. Procédé selon la revendication 12, dans lequel l'opération d'entretien comprend le montage, l'inspection et/ou le remplacement de la membrane (3), de joints d'étanchéité et/ou de pièces du cadre auxiliaire (2).

14. Procédé selon l'une quelconque des revendications 12 et 13, dans lequel l'étape consistant à extraire le cadre auxiliaire (2) de l'ensemble cadre de plateau filtrant (5) comprend :
relier de manière amovible un élément de répartition de charge (500B) à une extrémité du cadre auxiliaire (2) constituant une extrémité avant lors de l'extraction du cadre auxiliaire (2) hors de l'ensemble cadre de plateau filtrant ;
relier l'élément de répartition de charge (500) à un actionneur (401) par le biais d'un élément de transfert de charge (407) ;
actionner l'actionneur (401), le cadre auxiliaire (2) étant ainsi tiré hors de l'ensemble cadre de plateau filtrant (5) tandis qu'il est supporté de manière coulissante par la surface de support (105) de la structure de support (100).

15. Procédé selon l'une quelconque des revendications 12 et 13, dans lequel l'étape consistant à insérer le cadre auxiliaire (2) dans l'ensemble cadre de plateau filtrant (5) comprend :
relier de manière amovible un élément de répartition de charge (500A) à une extrémité du cadre auxiliaire (2) constituant une extrémité avant lors de l'insertion du cadre auxiliaire (2) dans l'ensemble cadre de plateau filtrant (5) ;
relier l'élément de répartition de charge (500) à un actionneur (304) par le biais d'un élément de transfert de charge (307), ledit actionneur (304) étant monté sur le filtre-presse (1) dans une position à l'opposé de la structure support (100) ;
actionner l'actionneur (304), le cadre auxiliaire (2) étant ainsi tiré dans l'ensemble cadre de plateau filtrant (5) tandis qu'il est supporté de manière coulissante par la surface de support (105) de la structure de support (100).

16. Utilisation d'un système de manipulation (1000) selon l'une quelconque des revendications 1 à 11 pour effectuer l'entretien d'un cadre auxiliaire (2) et de pièces de celui-ci dans un filtre-presse horizontal (1) du type tour.
